# EUROPÄISCHE PATENTSCHRIFT

(11) **EP 1 380 606 B1**
(45) Veröffentlichungstag und Bekanntmachung des Hinweises auf die Patenterteilung: **30.01.2008**
(21) Anmeldenummer: 03015076.7
(22) Anmeldetag: 03.07.2003
(51) Int. Cl.: C08G 8/08

(54) **Verwendung von Polykondensationsprodukten**
Use of polycondensation resins
Application de résines de polycondensation

(30) Priorität: 12.07.2002 DE 10231851
(43) Veröffentlichungstag der Anmeldung: 14.01.2004
(73) Patentinhaber: Hexion Specialty Chemicals GmbH, 58642 Iserlohn-Letmathe (DE)
(72) Erfinder: Suren, Josef, 33181 Bad Wünnenberg-Haaren (DE)

(56) Entgegenhaltungen:
- EP-A- 0 533 850
- WO-A-01/46101
- DE-A- 4 031 575
- US-A- 4 337 334
- US-A- 5 552 509
- DATABASE CHEMABS CHEMICAL ABSTRACTS SERVICE, COLUMBUS, OHIO, US; 1982, AISIN KAKO CO, LTD, ET AL.: "Binders for shell molds" XP002258554 & JP 57 059925 A (AISIN CHEM CO LTD; others: 01) 10. April 1982 (1982-04-10)
- "Bakelite-Phenolharze, Leitfaden, Produktauswahl, Anwendung" BAKELITE AG * Seiten 64-89 *

## Beschreibung

Die Erfindung betrifft die Verwendung von feuerfesten Massen im Feuerfestbereich.

Bisphenol-Rückstände sind Destillationsrückstände aus der Herstellung von Bisphenolen. Die in den weitaus größten Mengen anfallenden Rückstände sind die Destillationsrückstände aus der Herstellung von Bisphenol-A. Es sind harzartige Abfallprodukte, die bei der Herstellung von Bisphenol-A durch Kondensation von 2 Mol Phenol mit 1 Mol Aceton entstehen und die nach destillativer Abtrennung des Bisphenol-A als Rückstand verbleiben. Sie sind bei Raumtemperatur fest bis halbfest und klebrig und haben einen Erweichungspunkt im Bereich von 60 bis 70°C. Bei 75°C liegt ihre Viskosität im Bereich von etwa 5.000 bis 50.000 mPa·s.

Es wird verschiedentlich versucht, diese Nebenprodukte weiter zu verwenden, um ihre ansonsten notwendig werdende Entsorgung als Sondermüll zu vermeiden.

So ist aus EP-A 0 533 850 bekannt, Gemische aus Rückständen aus der Bisphenol-A-Herstellung und Phenolharzen als Bindemittelgemische zur Herstellung hochtemperaturbeständiger Formstoffe einzusetzen.

Gemäß DE-A 19529030 wird Destillationsrückstand aus der Bisphenol-Herstellung ggf. nach dem Cracken einer oxidativen Behandlung unterzogen und/oder mit einem Epoxid umgesetzt und als Glanzkohlenstoffbildner für Gießereisande verwendet.

Dennoch besteht weiterhin Bedarf an Einsatzmöglichkeiten für Bisphenol-A-Rückstände, insbesondere an solchen Verwendungen, bei denen Bisphenol-A-Rückstände in einfacher Weise zu höherwertigen Produkten umgesetzt und eingesetzt wird.

Die Lösung der Aufgabe erfolgt durch die Verwendung der Polykondensationsprodukte für feuerfeste Massen im Feuerfestbereich.

Es wurde gefunden, daß sich Bisphenol-Rückstände, insbesondere Bisphenol-A-Rückstände in saurem Medium mit Aldehyden, insbesondere mit Formaldehyd umsetzen lassen. Dabei entstehen novolakartige, nicht klebrige Polykondensationsprodukte mit einem Schmelzpunkt im Bereich von 70 bis 90°C, die sich mit einem Härtungsmittel, in der Regel Hexamethylentetramin, aber auch mit Resolen oder Epoxidverbindungen bei Temperaturen oberhalb 100°C in an sich bekannter Weise zu einem nicht mehr schmelzbaren, vernetzten Produkt härten lassen.

Während die Bisphenol-Rückstände sich in gebräuchlichen Lösemitteln nur sehr schwer lösen, lösen sich überraschenderweise die aus ihnen hergestellten erfindungsgemäßen Polykondensationsprodukte in den technisch üblichen, hochsiedenden Lösemitteln, wie z.B. Ethylenglykol, Diethylenglykol, Polyglykolen, Phthalaten oder den mit der allgemeinen Bezeichnung DBE bezeichneten Estern. Dies ermöglicht die Herstellung von toxikologisch unbedenklichen Lösungen, die bei Raumtemperatur zu verarbeiten sind und damit die Herstellung geformter feuerfester Erzeugnisse nach an sich bekannten Verfahren und zwar sowohl im Kalt- als auch im Warmmischverfahren.

Die reinen erfindungsgemäßen Polykondensationsprodukte ergeben bei ihrer Carbonisierung eine geringere Kohlenstoffausbeute als Phenolnovolake. Überraschenderweise aber erhält man bei den mit den erfindungsgemäßen Polykondensationsprodukten hergestellten feuerfesten Erzeugnissen nach der Carbonisierung eine höhere Kohlenstoffausbeute und eine höhere Oxidationsbeständigkeit als bei entsprechenden, gemäß dem Stand der Technik mit Phenolnovolaken hergestellten feuerfesten Erzeugnissen.

Die erfindungsgemäßen Polykondensationsprodukte sind nicht klebrig und lassen sich bei Raumtemperatur mahlen. Die so hergestellten Pulverharze eignen sich aufgrund der vorgenannten Eigenschaften insbesondere zur Herstellung von ungeformten Massen, die im Feuerfestbereich eingesetzt werden.
Dabei können jeweils Mischungsaufbau und Herstellungsweise sowohl für die geformten feuerfesten Erzeugnisse als auch für die ungeformten Massen dem Stand der Technik entsprechen, wie er aus der Technologie der Phenol-Novolake bekannt ist.

Die Herstellung der erfindungsgemäßen Polykondensationsprodukte erfolgt gemäß den aus der Herstellung der Phenolnovolake bekannten Verfahren durch Umsetzung der Bisphenol-Rückstände mit einem Aldehyd, bevorzugt von Bisphenol-A-Rückstand mit Formaldehyd, unter katalytischer Wirkung einer Säure. Die Herstellung kann dabei sowohl in der Schmelze erfolgen als auch in wäßriger Dispersion. Die bevorzugte Säure ist Oxalsäure. Das bevorzugte molare Verhältnis von Bisphenol-Rückstand zu Aldehyd liegt im Bereich von 1 : 0,2 bis 1 : 0,8. Dem Reaktionsgemisch können noch zusätzlich phenolische Verbindungen, insbesondere Phenol oder Alkylphenole zugesetzt werden. Anhand eines Ausführungsbeispiels soll die Erfindung näher erläutert werden.

### Beispiel I

61 kg Bisphenol-A Rückstand werden mit 300 g Oxalsäure versetzt und auf 100 °C aufgeheizt. Unter Rühren und Rückfluss lässt man 7,4 kg Formalin 45 %-ig zulaufen. Nach Beendigung der Zugabe wird die Reaktionsmischung bis zu einem Gehalt an freiem Formaldehyd von < 0,5 % unter Rückfluss erhitzt und danach durch Destillation von Wasser und Monomerbestandteilen wie Phenol und Formaldehyd befreit.
Durch Zugabe von 38 kg DBE und homogener Verteilung resultiert eine Viskosität der Harzlösung von 10.000 mPa·s bei 20 °C.

### Beispiel II

29 kg Bisphenol-A Rückstand und 29 kg Phenol werden mit 300g Oxalsäure versetzt und auf 100 °C aufgeheizt. Unter Rühren und Rückfluss lässt man 15 kg Formalin 45%ig zulaufen. Nach Beendigung der Zugabe wird die Reaktionsmischung bis zu einem Gehalt an freiem Formaldehyd von < 0,5 % unter Rückfluss erhitzt und danach durch Destillation von Wasser und Monomerbestandteilen wie Phenol und Formaldehyd befreit.
Durch Zugabe von 48 kg Furfürylalkohol und homogener Verteilung resultiert eine Viskosität von 2.000 mPa·s bei 20 °C.

## Patentansprüche

1. Verwendung von feuerfesten Massen im Feuerfestbereich, **dadurch gekennzeichnet, dass** bei der Herstellung der feuerfesten Massen ein Polykondensationsprodukt, hergestellt durch Umsetzung von Bisphenolrückständen mit einem Aldehyd in saurem Medium, verwendet wird.

2. Verwendung der feuerfesten Massen nach Anspruch 1, **dadurch gekennzeichnet, dass** die Bisphenol-Rückstände Bisphenol-A-Rückstände sind.

3. Verwendung der feuerfesten Massen nach zumindest einem der vorhergehenden Ansprüche, **dadurch gekennzeichnet, dass** der Aldehyd ein Formaldehyd ist.

4. Verwendung der feuerfesten Massen nach zumindest einem der vorhergehenden Ansprüche, **dadurch gekennzeichnet, dass** bei der Herstellung des Polykondensationsproduktes dem Reaktionsgemisch aus Bisphenol-Rückstand und Aldehyd noch eine oder mehrere phenolische Verbindungen zugesetzt werden.

5. Verwendung der feuerfesten Massen nach Anspruch 4, **dadurch gekennzeichnet, dass** die phenolische Verbindung Phenol ist.

6. Verwendung der feuerfesten Massen nach zumindest einem der vorhergehenden Ansprüche, **dadurch gekennzeichnet, dass** es feuerfeste Formkörper sind.

7. Verwendung der feuerfesten Massen nach zumindest einem der vorhergehenden Ansprüche, **dadurch gekennzeichnet, dass** es ungeformte feuerfeste Massen sind.

8. Verwendung der feuerfesten Massen nach zumindest einem der vorhergehenden Ansprüche, **dadurch gekennzeichnet, dass** das Polykondensationsprodukt in technisch üblichem hoch siedendem Lösungsmittel gelöst vorliegt.

9. Verwendung der feuerfesten Massen nach Anspruch 8, **dadurch gekennzeichnet, dass** das Lösungsmittel Ethylenglykol, Diethylenglykol, Polyglykole oder Phthalate oder DBE ist.

## Claims

1. Use of refractory compositions in the refractory field, **characterized in that** the refractory compositions are prepared using a polycondensation product prepared by reacting bisphenol residues with an aldehyde in an acidic medium.

2. Use of the refractory compositions according to Claim 1, **characterized in that** the bisphenol residues are bisphenol A residues.

3. Use of the refractory compositions according to at least one of the preceding claims, **characterized in that** the aldehyde is a formaldehyde.

4. Use of the refractory compositions according to at least one of the preceding claims, **characterized in that** during the preparation of the polycondensation product one or more phenolic compounds as well are added to the reaction mixture comprising bisphenol residue and aldehyde.

5. Use of the refractory compositions according to Claim 4, **characterized in that** the phenolic compound is phenol.

6. Use of the refractory compositions according to at least one of the preceding claims, **characterized in that** the products are refractory mouldings.

7. Use of the refractory compositions according to at least one of the preceding claims, **characterized in that** they are unmoulded refractory compositions.

8. Use of the refractory compositions according to at least one of the preceding claims, **characterized in that** the polycondensation product is present in solution in a high-boiling solvent customary in the art.

9. Use of the refractory compositions according to Claim 8, **characterized in that** the solvent is ethylene glycol, diethylene glycol, polyglycols or phthalates or DBE.

## Revendications

1. Utilisation de compositions résistant au feu dans le domaine de la résistance au feu, **caractérisée en ce que**, lors de la préparation des compositions résistant au feu, on utilise un produit de polycondensation préparé par la réaction de résidus de bisphénol avec un aldéhyde dans un milieu acide.

2. Utilisation des compositions résistant au feu selon la revendication 1, **caractérisée en ce que** les résidus de bisphénol sont des résidus de bisphénol A.

3. Utilisation des compositions résistant au feu selon au moins l'une des revendications précédentes, **caractérisée en ce que** l'aldéhyde est un formaldéhyde.

4. Utilisation des compositions résistant au feu selon au moins l'une des revendications précédentes, **caractérisée en ce que**, lors de la préparation du produit de polycondensation, un ou plusieurs composés phénoliques sont également ajoutés au mélange réactionnel de résidu de bisphénol et d'aldéhyde.

5. Utilisation des compositions résistant au feu selon la revendication 4, **caractérisée en ce que** le composé phénolique est le phénol.

6. Utilisation des compositions résistant au feu selon au moins l'une des revendications précédentes, **caractérisée en ce qu'**il s'agit de corps moulés résistant au feu.

7. Utilisation des compositions résistant au feu selon au moins l'une des revendications précédentes, **caractérisée en ce qu'**il s'agit de compositions résistant au feu non moulées.

8. Utilisation des compositions résistant au feu selon au moins l'une des revendications précédentes, **caractérisée en ce que** le produit de polycondensation est présent sous forme dissoute dans un solvant à point d'ébullition élevé, habituel dans l'industrie.

9. Utilisation des compositions résistant au feu selon la revendication 8, **caractérisée en ce que** le solvant est l'éthylèneglycol, le diéthylène-glycol, des polyglycols ou des phtalates ou l'OBE.
